# EUROPEAN PATENT SPECIFICATION

(11) **EP 0 662 298 B1**
(45) Date of publication and mention of the grant of the patent: **08.07.1998**
(21) Application number: 95500001.3
(22) Date of filing: 02.01.1995
(51) Int. Cl.: A47J 31/54

(54) **Safety water reservoir seal for domestic steam pressure coffee makers**
Sicherheitsverschluss für den dampferzeugenden Wasserbehälter einer Haushalts-Espressomaschine
Obturateur du réservoir d'eau sous pression à vapeur d'une machine à espresso ménagère

(30) Priority: 07.01.1994 ES 9400029 U
(43) Date of publication of application: 12.07.1995
(73) Proprietor: OFICINA DE INVESTIGACION AGRUPADA, S.A., 20600 Eibar (Guipuzcoa) (ES)
(72) Inventor: Ormaechea Laborda, Ignacio, E-20600 Eibar (Guipuzcoa) (ES)
(74) Representative: Carpintero Lopez, Francisco

(56) References cited:
- EP-A- 0 465 396
- EP-A- 0 563 506
- DE-A- 1 945 082
- US-A- 1 581 758

## Description

### OBJECT OF THE INVENTION

The present invention relates to a safety seal for a water reservoir for domestic steam pressure coffee makers.

The seal subject hereof has been devised in order for the operation to open the reservoir concurrently to open the respective valve that allows water into the said reservoir, though only when there is no pressure within the same.

### BACKGROUND OF THE INVENTION

It is well-known that steam pressure coffee makers are fitted with a water reservoir supplying the steam, the reservoir in large-scale coffee makers being duly tapped to the water mains, but not household coffee makers where a manual supply is needed whenever coffee is to be made, through a suitable mouth leading into the said reservoir.

Unlike conventional systems where the reservoir has a sealing screw top which does not allow coffee maker pressure to be lost through the same, the applicant has suggested a safety mechanism in EP-A-0 465 396 which forms the basis of the preamble of claim 1 of the present invention and wherein a safety seal is described in which the mouth of the reservoir comprises not only a conventional safety valve, duly scaled to give way when the pressure inside the reservoir exceeds a preset valve, but also a one-way valve of considerable diameter that is biased into a closed position by a spring, that is eventually assisted by the pressure within the reservoir, the valve being fitted with a hand-driven element with which it is opened, that can indeed be the spring as such, an actuating lever or a push-button, these elements lying usually concealed by a supplementary cap or top.

The solution in the aforementioned safety mechanism however, has a twofold drawback, namely on the one hand that the said one-way valve can be opened even if there is still pressure inside the water reservoir, the only determinant being that the manual effort required is greater than when there is no pressure, and on the other hand that two steps are required, namely the cover protecting the reservoir funnel or mouth must first be removed and the one-way valve then acted upon.

### DESCRIPTION OF THE INVENTION

It is an object of the present invention to provide a safety seal which would avoid the above problems.

The above objects are attained by a safety seal according to claim 1.

More specifically, the valve works with two opposing springs, one of them biasing its seal to the open position and the other to the closed position, the latter scaled at a greater pressure than the first spring and therefore outbalancing the same, and being associated to a swivel-mounted lever drivable against the spring it works with, in which event the spring will no longer be operative against the first spring and the valve will open.

In a preferred embodiment of the invention, the swivel-mounted valve is driven by a cam that is associated to the reservoir cover and hence when the cover swivels sideways, as required for access to the filling mouth, the lever will automatically swivel to free the one-way valve seal and the valve will open automatically only if there is no pressure inside the said reservoir, for such pressure will otherwise overcome the spring pressure biasing the same to the open position and such opening under pressure will not be possible.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:
Figure 1.- Is a sectional side elevation partial close-view of a pressure coffee maker having a safety water reservoir seal made in accordance with the object of the present invention, in particular at the height of the safety seal that appears in the closed position.
Figure 2.- Is a plan view of the assembly shown in the previous figure.
Figure 3.- Is a view similar to that of figure 1 of the same assembly but when the valve begins to open.
Figure 4.- Is a plan view of the assembly shown in figure 3.
Figure 5.- Is a view similar to that of figures 1 and 3 of the same assembly when the valve is wide open.
Figure 6.- Is a plan view of the assembly shown in figure 5.

### PREFERRED EMBODIMENT OF THE INVENTION

With reference to the drawings, a domestic steam pressure coffee maker provided with the safety seal subject hereof is fitted at the mouth (1) of its body, as described in EP-A-465 396, not only with a conventional safety valve (2), but with a one-way valve comprising a hole (3) of considerable diameter defining a seat for a seal (4) with its respective sealing gasket (5), which seal has a stem (6) axially coupled to it and projecting to the outside, i.e. into the funnel (7) defined just outside the said one-way valve (3-4) to foster the pouring of water into the reservoir.

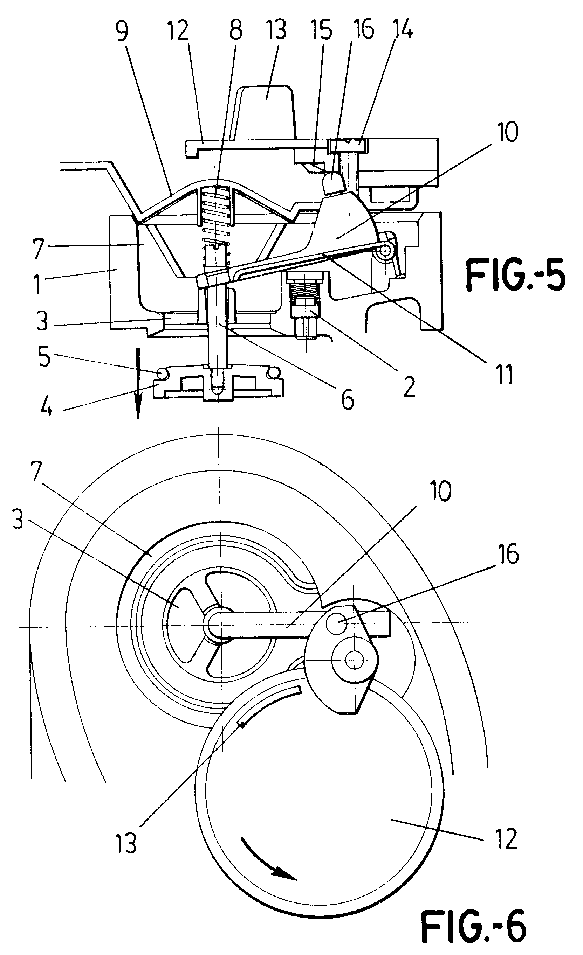

Now then, with this basic conventional construction, the invention focusses on the fact that the stem (6) works with a first spring (8) biasing the stem axially into the reservoir, i.e. to an open valve position shown in figure 5, in accordance with the arrow of such figure, the spring (8) being obviously mounted upon a support (9) duly fixed to the body (1) of the container in order for the spring (8) to work under compression.

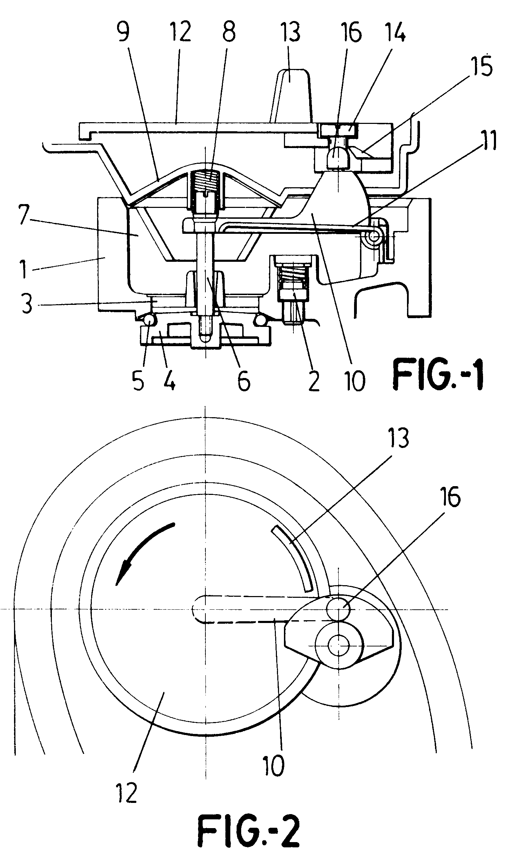

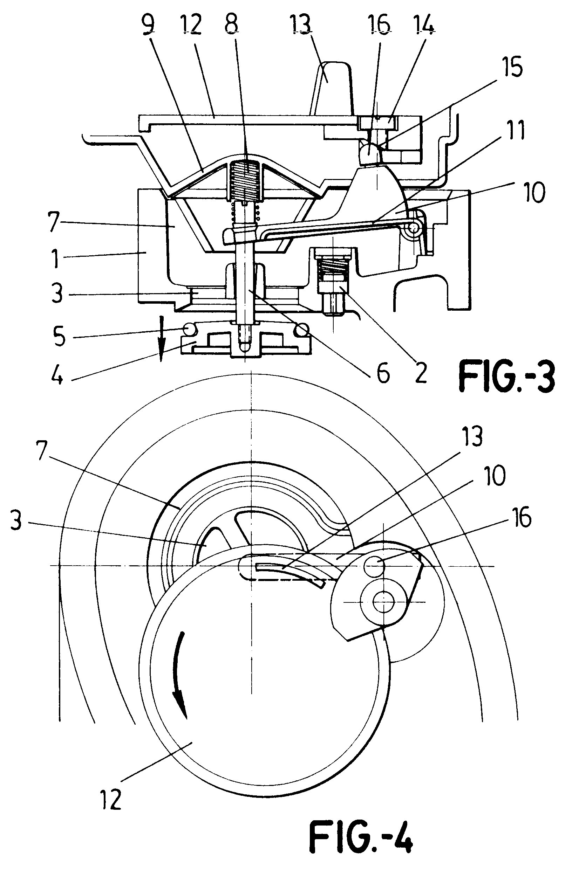

The stem (6) is further being acted upon by a swivel-mounted lever (10) working with a second spring (11) opposing the spring (8), i.e. acting in the opposite direction and with greater strength, in such a way that when the assembly is at rest, the spring (11) outbalances the spring (8) and the one-way valve plunger (4) is kept closed as shown in figure 1, whereas when the swivel-mounted lever (10) undergoes a sufficient pressure to overcome the spring (11) strength, it swivels down and frees the stem (6), allowing the seal (4) to move to the open valve position, as in figures 3 and 5, in the event that no steam pressure inside the water reservoir acts upon the plunger (4) to prevent the same from opening.

This manipulation of the swivel-mounted lever (10) takes place automatically during the operation to open the conventional top cover (12), which cover has a handle (13) to make it easier to turn about a screw (14) that is both the fixing means and the turning means for the cover (12) to and about the body (1).

More specifically, the cover (12) has a cam (15) which is out of step, with the cover (12) closed, relative to the swivel-mounted lever (10) and draws closer as it turns to the projection (16) on such lever, abutting against the same as shown in figure 3, to force the lever (10) to swivel down gradually, reaching a limiting position, as shown in figures 5 and 6, at which the seal (4) is wide open and the water reservoir can hence be filled without any problems.

Just as this safety seal can be opened with an almost instantaneous operation, namely turning the cover (12) acting upon the handle (13), once the reservoir is full, the original closed position can be instantaneously returned to by merely turning the cover (12) in the opposite direction, namely in the direction shown by the arrows in figures 2, 4 and 6.

The materials, shape, size and layout of the elements may be altered provided that this entails no modification of the essential features of the invention.

## Claims

1. A safety water reservoir seal for domestic steam pressure coffee makers, comprising a conventional relief valve (2), a one-way valve (3-4) at the mouth of the reservoir formed by a hole (3) of considerable diameter defining a seat for a disc-shaped seal (4), and a stem (6) which is connected to the disc-shaped seal (4) and projects to the outside of said hole (3) characterised by said stem (6) being acted upon by two opposing coils or springs (8,11), a first spring (8) acting directly on the stem (6) and biasing the valve to an open valve position, and the second spring (11) being associated to a swivel-mounted lever (10) and acting through the latter against the first spring (8) and biasing the valve to a closed valve position, the second spring (11) exerting a greater tension than the first spring and outbalancing the first spring (8) so that the one-way valve remains closed eventhough the lever (10) is made to swivel, and the first spring moves the sealing plunger (4), only if the reservoir pressure is less than the first spring (8) rating.

2. A safety water reservoir seal for domestic steam pressure coffee makers, as defined in claim 1, characterised in that a cover (12) sealing the reservoir mouth is mounted to turn about its body, said cover (12) comprising an outer drive handle (13) and a cam (15) on its inner face so that, when the cover (12) is swivelled sideways to the open position, it abuts against a top projection on the swivel-mounted lever (10), causing the latter to sink against the spring it works with to a position in which it frees the stem associated to the seal in order that the latter may be shifted to the open position by the other spring.

## Patentansprüche

1. Sicherheitsverschluss für den dampferzeugenden Wasserbehälter einer Haushalts-Espressomaschine mit einem üblichen Ablassventil (2), einem in einer Richtung wirkenden Ventil (3-4) in der Einlaufmündung des Behälters, das aus einer Öffnung (3) beachtlichen Durchmessers besteht und eine Aufnahme 3 für ein scheibenförmiges Verschlusselement (4) bildet, sowie einem Schaft (6), der mit dem scheibenförmigen Verschlusslement (4) verbunden ist und sich zur Aussenseite dieser Öffnung (3) erstreckt, dadurch gekennzeichnet, dass auf diesen Schaft (6) zwei gegenüberliegende Federn (8, 11) wirken, von denen die erste Feder (8) unmittelbar auf den Schaft (6) einwirkt und dazu neigt, das Ventil zu öffnen, und die zweite Feder (11) mit einem Schwenkhebel (10) verbunden ist, der über diese Feder gegen die erste Feder (8) drückt und das Ventil schliesst, wobei die zweite Feder (11) eine stärkere Kraft als die erste ausübt und die Kraft dieser ersten Feder (8) in der Weise überwindet, dass das in einer Richtung wirkende Ventil in seiner Verschlusstellung verharrt, obwohl der Hebel (10) verschwenkt wird, während die erste Feder den Verschlusskolben (4) nur dann verschiebt, wenn der Druck im Behälter unter dem Nennwert der ersten Feder (8) liegt.

2. Sicherheitsverschluss für den dampferzeugenden Wasserbehälter einer Haushalts-Espressomaschine, nach Anspruch 1 dadurch gekennzeichnet, dass der Verschlussdeckel (12) der Einlaufmündung des Behälters drehbar auf dem Gehäuse desselben befestigt wird, einen äusseren Betätigungsgriff (13) aufweist und an seiner Innenseite einen Nocken (15) besitzt, der bei seitlichem Drehen des Deckels (12) in die Öffnungsstellung auf eine obere Protuberanz des Schwenkhebels (10) auftrifft und den Hebel zwingt, gegen die Kraft der unterstützenden Feder nach unten in eine Stellung zu gleiten, in der er den mit dem Verschlusselement verbunden Schaft freigibt, damit dieses durch die andere Feder in die Öffnungsstellung geschoben werden kann.

## Revendications

1. Obturateur destiné au réservoir d'eau dans des cafetières ménagères sous pression à vapeur, qui comprend une soupape de déchargement conventionnel (2), une soupape unidirectionnelle (3-4) établie à l'ouverture du réservoir, formé par un orifice (3) au diamètre considérable déterminant une base pour un obturateur discoïdal (4) et qui est projeté vers l'extérieur de cet orifice (3), caractérisé par le fait que deux ressorts antagonistes (8,11) actionnent cette tige (6), un premier ressort (8) actionnant directement la tige (6) et avec une tendance à l'ouverture par soupape et le deuxième ressort (11) associé à un levier basculant (10) qui agit à travers ce dernier contre le premier ressort (8) et la soupape tendant à la fermeture par soupape, le deuxième ressort (11) exerçant une plus grande tension que le premier, le premier ressort (8) étant prépondérant, tout cela de manière à ce que la soupape unidirectionnelle soit maintenue en position de fermeture en dépit du fait que le levier (10) subit un actionnement de basculement et que le premier ressort déplace le piston obturateur (4), seulement si la pression du réservoir est inférieure à la valeur nominale du premier ressort (8).

2. Obturateur destiné au réservoir d'eau dans des cafetières ménagères sous pression à vapeur, conformément à ce qui est défini dans la 1ère revendication, et il se caractérise par le fait qu'un couvercle (12) de fermeture de l'ouverture du réservoir soit monté rotativement sur le corps de ce dernier; ce couvercle (12) comprend une manette extérieure (13) d'actionnement et de son côté intérieur une came (15) de sorte que lorsque le couvercle (12) bascule de côté vers l'emplacement de l'ouverture, il a une incidence sur une protubérance supérieure du levier basculant (10), en, forçant ce dernier à s'abattre contre le ressort à l'aide duquel il est utilisé, vers une situation où il laisse libre la tige associée à l'obturateur, pour que ce dernier puisse être déplacé vers la position d'ouverture par l'autre ressort.
